# EUROPÄISCHE PATENTSCHRIFT

(11) **EP 0 399 992 B1**
(45) Veröffentlichungstag und Bekanntmachung des Hinweises auf die Patenterteilung: **21.07.1993**
(21) Anmeldenummer: 90890144.0
(22) Anmeldetag: 11.05.1990
(51) Int. Cl.: B23K 11/00, B21F 27/10

(54) **Gitterschweissmaschine**
Gridwelding machine
Machine à souder pour grilles

(30) Priorität: 26.05.1989 AT 1278/89
(43) Veröffentlichungstag der Anmeldung: 28.11.1990
(73) Patentinhaber: EVG Entwicklungs- u. Verwertungs- Gesellschaft m.b.H., A-8042 Raaba (AT)
(72) Erfinder: Ritter, Klaus, Dipl.-Ing., A-8042 Graz (AT); Ritter, Gerhard, Dr., Dipl.-Ing., A-8043 Graz (AT); Jahrbacher, Gert, Dipl.-Ing, A-8120 Peggau 163 (AT); Jursche, Kurt, Ing., A-8010 Graz (AT)
(74) Vertreter: Holzer, Walter, Dipl.-Ing.

(56) Entgegenhaltungen:
- AT-B- 292 427
- DE-C- 3 500 717

## Beschreibung

Die Erfindung betrifft eine nach der elektrischen Widerstandsmethode arbeitende Schweißmaschine zum Herstellen von Gittern, die aus einander kreuzenden, an den Kreuzungspunkten verschweißten Längs- und Querdrähten bestehen, mit auf einer Seite einer horizontalen Schweißebene gestellfest angeordneten, mit Schweißtransformatoren verbundenen Stromschienen und mit mehreren, nebeneinander angeordneten Schweißköpfen, die je eine oberhalb der Schweißebene angeordnete Oberelektrode, eine unterhalb der Schweißebene angeordnete Unterelektrode, wobei eine der Elektroden gegen die andere bewegbar ist, ein die Schweißebene durchsetzendes Verbindungsstück von den Stromschienen zu der auf der gegenüberliegenden Seite der Schweißebene liegenden Elektrode und einen die bewegbare Elektrode mit Schweißdruck beaufschlagenden Schweißzylinder aufweisen, wobei die Schweißköpfe mittels eines mit den Schweißköpfen selektiv kuppelbaren Transportorganes quer zur Längsdraht-Vorschubrichtung in bestimmte Positionen bewegbar sind (siehe AT-B-292427).

Aus der DE-PS 35 00 717 ist eine Schweißmaschine bekannt, bei der ein aus einer unteren und einer oberen Schweißelektrode sowie einem Schweißtransformator bestehender Schweißkopf eine Antriebseinrichtung zum Verfahren des Schweißkopfes aufweist, wogegen die übrigen Schweißköpfe antriebslos ausgebildet und untereinander sowie mit dem die Antriebseinrichtung aufweisenden Schweißkopf nach Art eines Zuges verbunden sind. Bei dieser Konstruktion wird bei Erreichen der durch die Längsdrahtabstände im herzustellenden Gitter bestimmten Position jeweils ein Schweißkopf abgehängt. Nachteilig ist bei dieser Schweißmaschine die Tatsache, daß bei einer Positionsänderung auch nur weniger Schweißköpfe immer alle Schweißköpfe gekoppelt und bewegt werden müssen und daß außerdem die Schweißköpfe durch die in diese integrierten Schweißtransformatoren schwer und unhandlich sind.

Aus der AT-PS 292.427 ist eine hinsichtlich der Positionierung der Schweißköpfe bedienungsfreundlichere Schweißmaschine bekannt, bei der als Antriebseinrichtung zum Verfahren der Schweißköpfe eine sich über die gesamte Breite der Schweißmaschine erstreckende, angetriebene Spindel vorgesehen ist, mit welcher die Schweißköpfe über Kupplungselemente selektiv kuppelbar sind. Eine individuelle Beaufschlagung der einzelnen Schweißköpfe mit Schweißdruck ist jedoch bei dieser Konstruktion nicht möglich.

Bei einer Schweißmaschine gemäß einem älteren Vorschlag der Anmelderin ist zur Verschiebung der Schweißköpfe die obere Elektrode jedes Schweißkopfes auf die untere Elektrode absenkbar und/oder die Elektroden sind durch ein Kupplungselement mechanisch kuppelbar. Eine automatische Positionierung ist bei dieser Schweißmaschine nicht vorgesehen.

Bei den beiden zuletzt beschriebenen Schweißmaschinen gleitet jeder Schweißkopf auf einer unterhalb der Schweißebene angeordneten Schiene. Wegen der bei der Gitterproduktion auftretenden Verschmutzung dieser Gleitflächen, insbesondere durch Abrieb, Zunder und Schweißspritzer, treten Probleme beim Verschieben der Schweißköpfe auf, ferner besteht die Gefahr eines Verkantens der Schweißköpfe, die noch dadurch begünstigt wird, daß die Schweißköpfe weit unterhalb ihres Schwerpunktes abgestützt sind.

Aufgabe der vorliegenden Erfindung ist es, eine Schweißmaschine der einleitend angegebenen Gattung zu schaffen, welche die geschilderten Nachteile des Standes der Technik vermeidet und auf einfache Weise eine stabile Kupplung der unteren und oberen Elektrodenhalter des Schweißkopfes sowie ein sicheres Verstellen desselben ermöglicht. Die erfindungsgemäße Schweißmaschine zeichnet sich dadurch aus, daß die Unterelektrode in vertikaler Richtung mittels des druckmittelbetätigten Schweißzylinders und eines den Schweißzylinder abstützenden höhenverstellbaren Amboß an die Oberelektrode andockbar ist, daß ein die Unterelektrode tragender unterer Elektrodenhalter mit dem Verbindungsstück, das seinerseits mit einem die Oberelektrode tragenden oberen Elektrodenhalter fest verbunden ist, zur Bildung eines mechanisch starren Schweißkopfes verbindbar ist, und daß dieser starre Schweißkopf von einem gestellfesten Oberbalken der Schweißmaschine, von den Stromschienen und vom Amboß lösbar, mit einem Positionierwagen kuppelbar und mit diesem längs einer quer zur Längsdraht-Vorschubrichtung über die Schweißmaschinenbreite verlaufenden Fahrbahn verfahrbar ist, wobei der Schweißkopf zugleich im Bereich seiner Unterseite an einer sich quer zur Längsdraht-Vorschubrichtung über die Schweißmaschinenbreite erstreckenden Stützbahn abstützbar ist, und daß alle positionierten Schweißköpfe durch gemeinsame Vertikalverschiebung am gestellfesten Oberbalken der Schweißmaschine fixierbar sind und jeder einzelne Schweißkopf mittels seines Schweißzylinders auf dem Amboß abstützbar ist.

Hierdurch kann jeder einzelne Schweißkopf von den gestellfesten Vorrichtungen der Schweißmaschine, insbesondere von der unteren Auflagefläche des Schweißzylinders am Amboß, getrennt werden und es kann vorteilhaft eine automatische Verschiebung und Positionierung der Schweißköpfe ohne Gefahr eines Verkantens und Verwindens sowie nach der Positionierung ein senkrechtes Aufsetzen der Schweißköpfe auf die Auflagefläche am Amboß erfolgen.

Gemäß einer bevorzugten Ausführungsform der Erfindung ist der untere Elektrodenhalter mit dem Verbindungsstück über zumindest einen, am unteren Elektrodenhalter angebrachten und in eine Zentrierausnehmung am Verbindungsstück einführbaren Zentrierstift sowie einen im Verbindungsstück angeordneten und in den unteren Elektrodenhalter horizontal einführbaren Arretierstift mechanisch verbindbar.

Nach einem anderen Erfindungsmerkmal ist der Schweißkopf mittels eines druckmittelbetätigten Klemmzylinders und einer bei Druckentlastung im Schweißzylinder wirksamen, diesen in vertikaler Richtung beaufschlagenden Rückstellfeder vom Amboß sowie durch Absenken einer die Fahrbahn tragenden, höhenverstellbaren und ansteuerbaren Fahrbahnaufhängung vom gestellfesten Oberbalken lösbar.

Vorzugsweise ist der Positionierwagen zwischen einer Parkposition und einer Arbeitsposition vertikal verstellbar und auf Laufschienen, die an einem sich über die Schweißmaschinenbreite erstreckenden Fahrbahnträger angeordnet sind, horizontal quer zur Längsdraht-Vorschubrichtung verfahrbar.

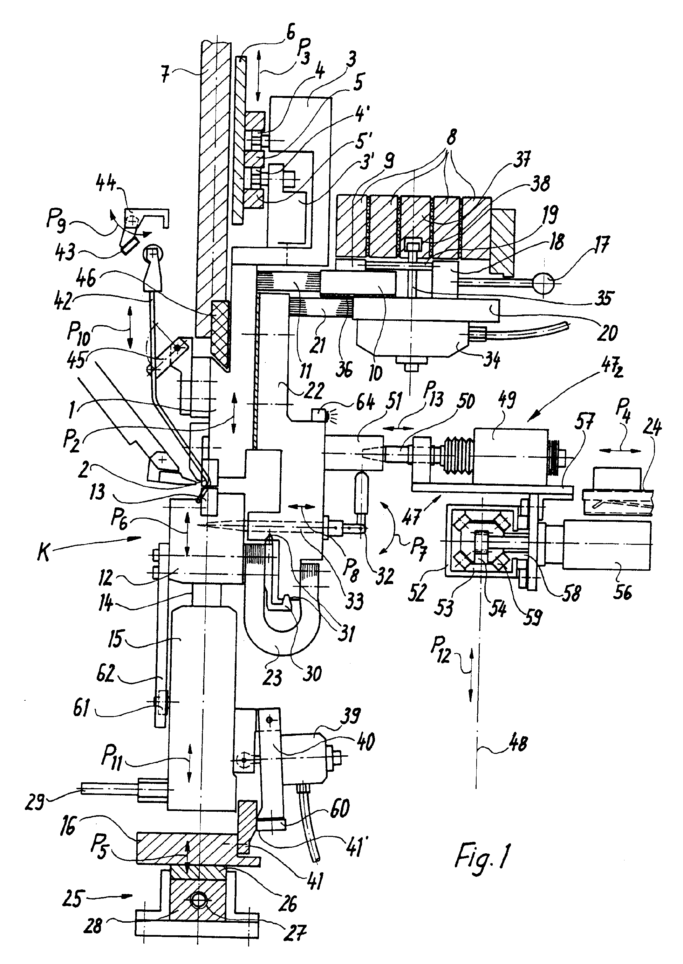

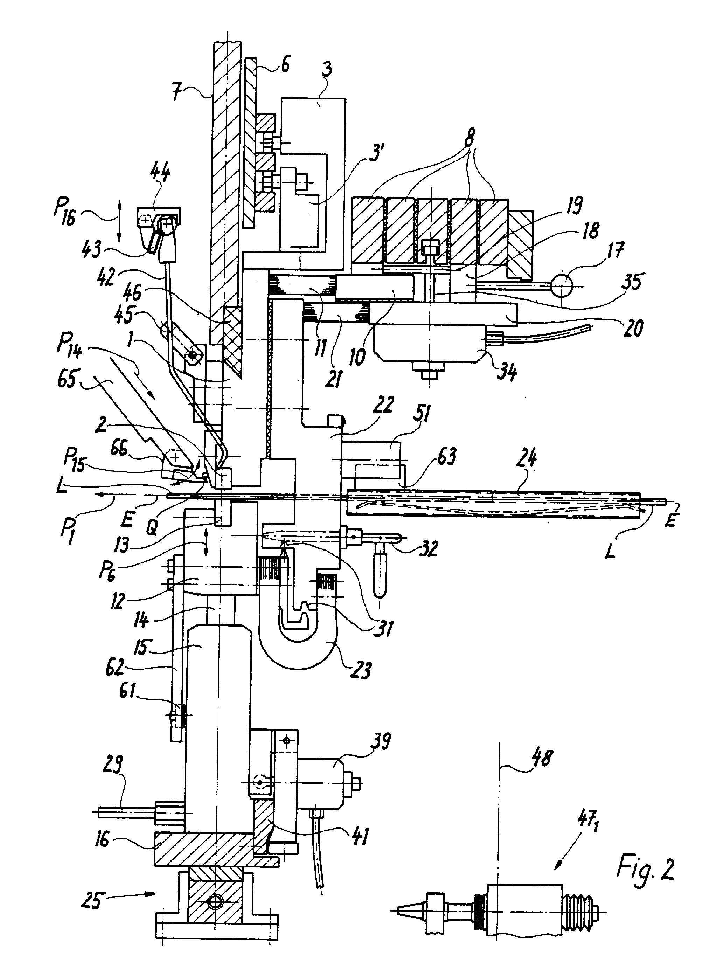

Weitere Merkmale der Erfindung werden nachfolgend an einem Ausführungsbeispiel unter Bezugnahme auf die Zeichnungen näher erläutert, in denen die Fig. 1 und 2 je einen Schnitt durch eine Schweißmaschine gemäß der Erfindung zeigen, wobei gemäß Fig. 1 ein Schweißkopf der Schweißmaschine in der Verschiebeposition und gemäß Fig. 2 in der Schweißposition dargestellt ist.

In der dargestellten Schweißmaschine werden mit Hilfe mehrerer, quer zur Längsdrahtvorschubrichtung P₁ nebeneinander angeordnete Schweißköpfe K jeweils ein Querdraht Q mit Längsdrähten L einer Längsdrahtschar verschweißt. Die Schweißköpfe K sind in Abhängigkeit von der geforderten Längsdrahtteilung im herzustellenden Gitter horizontal in einer Schweißlinie angeordnet. Die Längsdrahtschar definiert eine horizontale Schweißebene E-E.

Jeder Schweißkopf K weist einen oberen, entsprechend dem Doppelpfeil P₂ vertikal verschiebbaren Elektrodenhalter 1 auf, an dessen Unterseite eine Oberelektrode 2 eingesetzt ist. Der obere Elektrodenhalter 1 hat ein Fahrwerk 3 mit einem Laufrad 4, über welches der Elektrodenhalter parallel zur Schweißlinie auf einer sich über die gesamte Schweißmaschinenbreite erstreckenden Fahrbahn 5 läuft. Die Fahrbahn 5 ist mittels einer Fahrbahnaufhängung 6 entsprechend dem Doppelpfeil P₃ vertikal verschiebbaren, mit einem feststehenden, an einem nicht dargestellten Maschinengestell der Schweißmaschine befestigten Oberbalken 7 verbunden, wobei die Verbindung nicht dargestellt ist.

Um die Schweißköpfe K so dicht wie möglich anordnen zu können, sind das Fahrwerk 3, das Laufrad 4 und die Fahrbahn 5 des benachbarten Schweißkopfes versetzt angeordnet. Der Schweißstrom wird dem oberen Elektrodenhalter 1 von einer von insgesamt vier Stromschienen 8, die jeweils mit nicht dargestellten Transformatoren verbunden sind, über ein Schiebekontaktstück 9, einen anschließenden Stromabnehmer 10 und ein oberes Stromband 11 zugeführt.

Jeder Schweißkopf weist außerdem einen unteren Elektrodenhalter 12 auf, in dessen Oberseite eine Unterelektrode 13 eingesetzt ist. Der untere Elektrodenhalter 12 ist mit einem Stößel 14 eines beispielsweise hydraulisch betätigten Schweißzylinders 15 verbunden, der sich auf einem Amboß 16 abstützt, welcher sich über die Maschinenbreite erstreckt.

Der Schweißstrom für die Unterelektrode 13 wird dem unteren Elektrodenhalter 12 analog zum Schweißstrom für die Oberelektrode 2 von der mittels eines Schiebers 17 entsprechend ausgewählten Stromschiene 8 über ein Schiebekontaktstück 18, das mittels eines Isolierstückes 19 fest mit dem Schiebekontaktstück 9 des Strompfades für die Oberelektrode 2 verbunden ist, einen anschließenden Stromabnehmer 20, ein flexibles Stromband 21, ein die Schweißebene E-E durchsetzendes Verbindungsstück 22 und ein unteres Stromband 23 zugeführt. Das Verbindungsstück 22 ist mechanisch mit dem oberen Elektrodenhalter 1 verschraubt, von diesem jedoch durch eine isolierende Schicht elektrisch getrennt.

Um von der in Fig. 2 dargestellten Schweißposition eines einzelnen Schweißkopfes in die in Fig. 1 dargestellte Verschiebeposition zu gelangen, in der das Verschieben der Schweißköpfe K quer zur Vorschubrichtung P₁ der Längsdrähte L ermöglicht wird, sind die folgenden Schritte erforderlich: Ein die Zufuhr der Längsdrähte L zur Schweißlinie ermöglichendes Längsdrahtzuführrohr 24 wird in Richtung nach rechts (Doppelpfeil P₄) vom Schweißkopf entfernt. Der Amboß 16 wird mittels eines am Grundrahmen der Schweißmaschine befestigten Hubkeilgetriebes 25, das aus einem festen Keil 26 und einem mittels Zugstange 27 bewegten Verschiebekeil 28 besteht, nach oben angehoben (Doppelpfeil P₅). Bei dieser Bewegung hebt der Amboß 16 gleichzeitig den Schweißzylinder 15 sowie den unteren Elektrodenhalter 12 nach oben an (Doppelpfeil P₁₁ bzw. P₆). Anschließend wird der Schweißzylinder 15 über einen Hydraulikanschluß 29 mit Druck beaufschlagt, und der Stößel 14 mit dem daran befestigten unteren Elektrodenhalter 12 fährt nach oben (Doppelpfeil P₆) so weit aus, daß die Unterelektrode 13 an die Oberelektrode 2 andockt. Zumindest ein am unteren Elektrodenhalter 12 seitlich befestigter Zentrierstift 30 rastet in eine entsprechend geformte Zentrierausnehmung 31 am Verbindungsstück 22 ein. Durch Betätigung eines Arretierhebels 32 entsprechend dem Doppelpfeil P₇ wird ein im Verbindungsstück 22 horizontal verschiebbarer Arretierstift 33 nach links (Doppelpfeil P₈) so weit vorgeschoben, daß er in eine entsprechende Zentrierbohrung im unteren Elektrodenhalter 12 gelangt. Damit wird das Verbindungsstück 22 und somit auch der obere Elektrodenhalter 1 mit dem unteren Elektrodenhalter 12 mechanisch fest gekuppelt. Die Betätigung des Arretierhebels 32 kann auch mittels einer nicht dargestellten, beispielsweise hydraulisch betätigten Vorrichtung automatisch erfolgen.

Danach wird der Schweißkopf K von den gestellfest mit der Schweißmaschine verbundenen Teilen, wie dem Oberbalken 7, den Stromschienen 8 und dem Amboß 16 gelöst. Zunächst wird eine Kontaktschraube 35 gelockert, mit welcher in der Schweißposition der Stromabnehmer 20, der Stromabnehmer 10 und die Schiebekontaktstücke 9, 18 unter der Wirkung einer beispielsweise hydraulisch betätigten Klemmeinrichtung 34 fest an die mittels des Schiebers 17 entsprechend ausgewählten Stromschienen 8 gepreßt werden, wobei der Stromabnehmer 20 durch eine Isolierschicht 36 elektrisch vom Stromabnehmer 10 isoliert ist. Der Kopf der Kontaktschraube 35 ist derart ausgebildet, daß er in einer T-Nut 38 gleiten kann, die sich in einem Sammelschienenträger 37 parallel zur Schweißlinie über die gesamte Breite der Schweißmaschine erstreckt. Gleichzeitig wird durch einen, beispielsweise ebenfalls hydraulisch betätigbaren Klemmzylinder 39 ein Klemmstück 40 gelockert, so daß sich der Schweißzylinder 15 von einer mit dem Amboß 16 verschraubten, sich über die gesamte Breite der Schweißmaschine erstreckenden Klemmleiste 41 lösen kann. Ein zum Zuführen des Querdrahtes Q zur Schweißlinie dienender Zubringer 42, der in der Schweißposition des Schweißkopfes mittels einer Sperrleiste 43 mit einer am Grundrahmen der Schweißmaschine ortsfest angeordneten Zubringerbetätigung 44 verbunden ist, wird durch Schwenken der Sperrleiste 43 nach links (Doppelpfeil P₉) gelöst, und fällt durch eine am oberen Elektrodenhalter 1 befestigte Zubringerführung 45 geführt in Richtung des Doppelpfeiles P₁₀ nach unten in eine unterste Lage.

Anschließend wird der Arbeitsdruck im Schweißzylinder 15 abgeschaltet, worauf der Stößel 14, der über den unteren Elektrodenhalter 12 und über den Arretierstift 33 am oberen Elektrodenhalter 1 hängt, durch eine im Schweißzylinder 15 eingebaute, nicht dargestellte Rückstellfeder den Schweißzylinder 15 nach oben anhebt (Doppelpfeil P₁₁) und den Schweißzylinder 15 damit vom Amboß 16 löst. Abschließend wird die Fahrbahnaufhängung 6 durch nicht dargestellte Einrichtungen nach unten abgesenkt (Doppelpfeil P₃), wodurch der mit dem Fahrwerk 3 am Fahrbahnträger 6 aufgehängte obere Elektrodenhalter sich gleichzeitig absenkt (Doppelpfeil P₂) und den oberen Elektrodenhalter 1 von einer am unteren Ende des Oberbalkens 7 isoliert angebrachten, vorzugsweise spitzwinkeligen Zentrierleiste 46 löst.

Aus einer in Fig. 2 dargestellten Parkposition 47₁ wird ein Positionierwagen 47 entlang einer nur schematisch angedeuteten Zahnstange 48 in eine in Fig. 1 dargestellte Arbeitsposition 47₂ gebracht (Doppelpfeil P₁₂). Zur Kupplung des Positionierwagens 47 mit dem zu verschiebenden Schweißkopf wird mittels einer Mitnehmerbetätigung 49 ein Mitnehmer 50 nach links vorgeschoben (Doppelpfeil P₁₃), bis er in einer entsprechend ausgebildeten Ausnehmung in einem am Verbindungsstück 22 des Schweißkopfes vorteilhaft nahe der Schweißebene E-E angebrachten Zentrierstück 51 einrastet.

In einem mit dem Grundgestell der Schweißmaschine fest verbundenen, sich quer zu den Längsdrähten L und über die gesamte Breite der Schweißmaschine erstreckenden Fahrbahnträger 52 sind zwei Laufschienen 53 sowie eine weitere Zahnstange 54 angeordnet. Mit Hilfe eines in die Zahnstange 54 eingreifenden Antriebsritzels 55 eines Schrittmotors 56, der ebenso wie die Mitnehmerbetätigung 49 an einer Konsole 57 des Positionierwagens 47 befestigt ist und eine Laufrollenaufhängung 58 mit mehreren sich auf den Laufschienen 53 abstützenden Laufrollen 59 aufweist, wird der Schweißkopf K in der Schweißebene E-E quer zur Längsdraht-Vorschubrichtung P₁ (Fig. 2) verschoben. Während dieser Verschiebung hängt der Schweißkopf K einerseits über die Laufräder 4 an der Fahrbahn 5 der Fahrbahnaufhängung 6 und stützt sich anderseits unten über ein Stützrad 60 auf der seitlich mit einer Stützbahn 41' versehenen Klemmleiste 41 ab. Durch Anbringen des auch zur Zentrierung des Längsdrahtzuführrohres 24 dienenden Zentrierstückes 51 möglichst in der Schweißebene E-E, die praktisch die horizontale Mittellinie des Schweißkopfes K darstellt und daher nahe dem Schwerpunkt desselben liegt, ist eine Parallelverschiebung des Schweißkopfes ohne großen Kraftaufwand möglich. Durch das Abheben des Schweißkopfes K vom gestellfesten Amboß 16 und durch die Aufhängung des Schweißkopfes oberhalb der Schweißebene E-E sowie die gleichzeitige Abstützung unterhalb der Schweißebene E-E wird eine Verschiebung des Schweißkopfes ohne Verkanten und Verwinden gewährleistet.

Eine am unteren Elektrodenhalter 12 befestigte und mittels einer Führungsrolle 61 verschiebbar mit dem Schweißzylinder 15 verbundene Verdrehsicherung 62 verhindert während des Verschiebens ein Verdrehen des Schweißzylinders 15 gegenüber dem unteren Elektrodenhalter 12.

Nachdem der Schweißkopf K seine Schweißposition erreicht hat, die von der Lage des Längsdrahtes im herzustellenden Gitter abhängt, wird der Positionierwagen 47 durch Herausziehen des Mitnehmers 50 aus dem Zentrierstück 51 (Doppelpfeil P₁₃) vom Schweißkopf K gelöst und kann anschließend die Positionierung eines weiteren Schweißkopfes übernehmen. Nach Beendigung der Positioniertätigkeit fährt der Positionierwagen 47 nach unten in seine Parkposition 47₁ zurück (Doppelpfeil P₁₂).

Um die Positioniergeschwindigkeit zu erhöhen, ist es möglich, mehrere Positionierwagen gleichzeitig auf dem gleichen oder auch auf verschiedenen Fahrbahnträgern zu verwenden.

Um von der Verschiebeposition in die Schweißposition zu gelangen, werden durch Anheben der allen Schweißköpfen gemeinsamen Fahrbahnaufhängung 6 alle Schweißköpfe gleichzeitig angehoben (Doppelpfeil P₃) und damit die oberen Elektrodenhalter 1 aller Schweißköpfe in der Zentrierleiste 46 des Oberbalkens 7 fixiert. Durch Beaufschlagen jedes Schweißzylinders 15 mit Arbeitsdruck drückt der Stößel 14 den Schweißzylinder 15 nach unten (Doppelpfeil P₁₁), bis der Schweißzylinder 15 auf dem Amboß 16 aufsitzt. Nunmehr kann durch Schwenken des Arretierhebels 32 in Richtung des Doppelpfeiles P₇ der Arretierstift 33 nach rechts zurückgezogen werden (Doppelpfeil P₈), und damit wird auch die mechanische Verbindung zwischen dem unteren Elektrodenhalter 12 und dem Verbindungsstück 22 und somit auch mit dem oberen Elektrodenhalter 1 gelöst.

Anschließend werden durch Betätigung der Klemmeinrichtung 34 der obere Elektrodenhalter 1 bzw. das Verbindungsstück 22 über die Stromabnehmer 10, 20 und die Schiebekontaktstücke 9, 18 mit den durch den Schieber 17 entsprechend ausgewählten Stromschienen elektrisch verbunden. Durch Betätigung des Klemmzylinders 39 werden das Klemmstück 40 sowie der Schweißzylinder 15 gegen die Klemmleiste 41 gedrückt und damit auf dem Amboß 16 fixiert. Der Arbeitsdruck im Schweißzylinder 15 wird nunmehr abgeschaltet, wodurch der Stößel 14 durch die im Schweißzylinder 15 eingebaute Rückstellfeder einfährt und den unteren Elektrodenhalter 12 nach unten mitnimmt (Doppelpfeil P₆).

Abschließend wird der Amboß 16 mit Hilfe des Hubkeilgetriebes 25 in eine unterste Stellung abgesenkt (Doppelpfeil P₅), um das Einfädeln der Längsdrähte L in die Schweißlinie zu erleichtern. Der Zubringer 42 wird angehoben (Doppelpfeil P₁₀) und durch Schwenken der Sperrleiste 43 nach rechts (Doppelpfeil P₉) an der Zubringerbetätigung 44 befestigt. Das Längsdrahtzuführrohr 24 wird nach links vorgeschoben (Doppelpfeil P₄) und auf den in Schweißposition befindlichen Schweißkopf mittels einer in das Zentrierstück 51 greifenden Zentrierfahne 63 einjustiert, wobei dies automatisch mittels einer Positioniereinrichtung aber auch von Hand durchgeführt werden kann. Mittels einer Anzeige 64 werden alle in Schweißposition befindlichen Schweißköpfe markiert.

Nach dem Einfädeln der Längsdrähte L wird der Amboß 16 mit Hilfe des Hubkeilgetriebes 25 so weit nach oben angehoben (Doppelpfeil P₅), bis in Abhängigkeit von der Gesamtdrahtstärke des zu verschweißenden Längsdrahtes L und Querdrahtes Q der geringstmögliche Schweißhub des unteren Elektrodenhalters 12 entsprechend dem Doppelpfeil P₅ eingestellt ist.

In der in Fig. 2 dargestellten Schweißposition arbeitet der Schweißkopf wie folgt: Über eine Querdrahtzuführung 65 wird in Richtung des Pfeiles P₁₄ der Querdraht Q zugeführt und gelangt auf eine den Zuführkanal der Querdrahtzuführung 65 verschließende Querdrahtklappe 66. Der Längsdraht L wird aus dem Längsdrahtzuführrohr 24 durch eine entsprechend ausgebildete Ausnehmung im Verbindungsstück 22 in die Schweißlinie zwischen die Oberelektrode 2 und die Unterelektrode 13, in Richtung des Pfeiles P₁ vorgeschoben. Der Längsdraht L wird dabei durch nicht gezeigte Führungselemente im Längsdrahtzuführrohr 24 in einer Position gehalten, die verhindert, daß beim Vorschub der Längsdrähte in Richtung des Pfeiles P₁ der Draht nicht auf der Unterelektrode 13 schleift. Durch Schwenken der Querdrahtklappe 66 nach unten (Doppelpfeil P₁₅) wird der Zuführkanal für den Querdraht Q freigegeben und der Querdraht Q fällt nach unten. Durch Betätigung der Zubringerbetätigung 44 nach unten (Doppelpfeil P₁₆) wird der Querdraht durch den Zubringer 42 gegen nicht dargestellte, sich in der Schweißlinie befindende Querdrahtanschläge in die Schweißlinie gefördert und dort nach Beaufschlagung mit dem Schweißdruck und Einschalten des Schweißstromes mit den Längsdrähten L verschweißt. Dabei dient die feststehende Oberelektrode 2 als Widerlager zum Aufbau des erforderlichen Schweißdruckes.

Zur Steuerung der einzelnen Vorrichtungen für die automatische Verschiebung und Positionierung der Schweißköpfe, wie Fahrbahnaufhängung 7, Schweißzylinder 15, Hubkeilgetriebe 25, Arretierhebel 32, Klemmeinrichtung 34, Klemmzylinder 39, Positionierwagen 47, Mitnehmerbetätigung 49 und Schrittmotor 56, ist eine nicht dargestellte Steuereinrichtung vorgesehen.

## Patentansprüche

1. Nach der elektrischen Widerstandsmethode arbeitende Schweißmaschine zum Herstellen von Gittern, die aus einander kreuzenden, an den Kreuzungspunkten verschweißten Längs- und Querdrähten (L,Q) bestehen, mit auf einer Seite einer horizontalen Schweißebene (E-E) gestellfest angeordneten, mit Schweißtransformatoren verbundenen Stromschienen (8) und mit mehreren nebeneinander angeordneten Schweißköpfen (K), die je eine oberhalb der Schweißebene (E-E) angeordnete Oberelektrode (2), eine unterhalb der Schweißebene (E-E) angeordnete Unterelektrode (13), wobei eine der Elektroden gegen die andere bewegbar ist, ein die Schweißebene (E-E) durchsetzendes Verbindungsstück (22) von den Stromschienen (8) zu der auf der gegenüberliegenden Seite der Schweißebene (E-E) liegenden Elektrode und einen die bewegbare Elektrode mit Schweißdruck beaufschlagenden, ansteuerbaren Schweißzylinder (15) aufweisen, wobei die Schweißköpfe (K) mittels eines mit den Schweißköpfen selektiv kuppelbaren Transportorganes (47) quer zur Längsdraht-Vorschubrichtung (P₁) in bestimmte Positionen bewegbar sind, dadurch gekennzeichnet, daß die Unterelektrode (13) in vertikaler Richtung mittels des druckmittelbetätigten Schweißzylinders (15) und eines den Schweißzylinder abstützenden höhenverstellbaren Amboß (16) an die Oberelektrode (2) andockbar ist, daß ein die Unterelektrode (13) tragender unterer Elektrodenhalter (12) mit dem Verbindungsstück (22), das seinerseits mit einem die Oberelektrode (2) tragenden, oberen Elektrodenhalter (1) fest verbunden ist, zur Bildung eines mechanisch starren Schweißkopfes (K) verbindbar ist, und daß dieser starre Schweißkopf (K) von einem gestellfesten Oberbalken (7) der Schweißmaschine, von den Stromschienen (8) und vom Amboß (16) lösbar, mit einem Positionierwagen (47) kuppelbar und mit diesem längs einer quer zur Längsdraht-Vorschubrichtung (P₁) über die Schweißmaschinenbreite verlaufenden Fahrbahn (5) verfahrbar ist, wobei der Schweißkopf (K) zugleich im Bereich seiner Unterseite an einer sich quer zur Längsdraht-Vorschubrichtung (P₁) über die Schweißmaschinenbreite erstreckenden Stützbahn (41') abstützbar ist, und daß alle positionierten Schweißköpfe (K) durch gemeinsame Vertikalverschiebung am gestellfesten Oberbalken (7) der Schweißmaschine fixierbar sind und jeder einzelne Schweißkopf mittels seines Schweißzylinders (15) auf dem Amboß (16) abstützbar ist.

2. Schweißmaschine nach Anspruch 1, dadurch gekennzeichnet, daß der untere Elektrodenhalter (12) mit dem Verbindungsstück (22) über zumindest einen, am unteren Elektrodenhalter (12) angebrachten und in eine Zentrierausnehmung (31) am Verbindungsstück (22) einführbaren Zentrierstift (30) sowie einen im Verbindungsstück (22) angeordneten und in den unteren Elektrodenhalter (12) horizontal einführbaren Arretierstift (33) mechanisch verbindbar ist.

3. Schweißmaschine nach Anspruch 1 oder 2, dadurch gekennzeichnet, daß der Schweißkopf mittels einer vorzugsweise druckmittelbetätigten Klemmeinrichtung (34) zur Herstellung eines elektrischen Kontaktes mit den gestellfesten Stromschienen (8) lösbar verbunden ist.

4. Schweißmaschine nach einem der Ansprüche 1 bis 3, dadurch gekennzeichnet, daß der Schweißkopf mittels eines druckmittelbetätigten Klemmzylinders (39) und einer bei Druckentlastung im Schweißzylinder (15) wirksamen, diesen in vertikaler Richtung beaufschlagenden Rückstellfeder vom Amboß (16) sowie durch Absenken einer die Fahrbahn (5) tragenden, höhenverstellbaren und ansteuerbaren Fahrbahnaufhängung (6) vom gestellfesten Oberbalken (7) lösbar ist.

5. Schweißmaschine nach einem der Ansprüche 1 bis 4, dadurch gekennzeichnet, daß der Positionierwagen (47) zwischen einer Parkposition (47₁) und einer Arbeitsposition (47₂) vertikal verstellbar und auf Laufschienen (53), die an einem sich über die Schweißmaschinenbreite erstreckenden Fahrbahnträger (52) angeordnet sind, horizontal quer zur Längsdraht-Vorschubrichtung (P₁) verfahrbar ist.

6. Schweißmaschine nach einem der Ansprüche 1 bis 5, dadurch gekennzeichnet, daß der Positionierwagen (47) mit einem Mitnehmer (50) versehen ist, der mittels einer ansteuerbaren Betätigungseinrichtung (49) in ein am Verbindungsstück (22) in der Schweißebene (E-E) angebrachtes, zugleich zur Zentrierung eines Längsdrahtzuführrohres (24) dienendes Zentrierstück (51) einführbar ist.

7. Schweißmaschine nach einem der Ansprüche 1 bis 6, dadurch gekennzeichnet, daß der Positionierwagen (47) mit einem ansteuerbaren Schrittmotor (56) ausgestattet ist.

8. Schweißmaschine nach einem der Ansprüche 1 bis 7, dadurch gekennzeichnet, daß zum Verschieben und Positionieren der Schweißköpfe (K) mehrere Positionierwagen (47) auf einem gemeinsamen oder einem jedem Positionierwagen (47) zugeordneten Fahrbahnträger (52) vorgesehen sind.

9. Schweißmaschine nach einem der Ansprüche 1 bis 8, dadurch gekennzeichnet, daß der Amboß (16) zum Andocken der Unterelektrode (13) an die Oberelektrode (2) und zum Einstellen des an die Gesamtdrahtstärke von Längsdraht (L) und Querdraht (Q) angepaßten Öffnungsspaltes zwischen Oberelektrode (2) und Unterelektrode (13) mittels eines ansteuerbaren Hubkeilgetriebes (25) verstellbar ist.

10. Schweißmaschine nach einem der Ansprüche 1 bis 9, dadurch gekennzeichnet, daß jeder positionierte Schweißkopf (K) an einer mit dem Amboß (16) verbundenen Klemmleiste (41) mittels eines druckmittelbetätigten Klemmzylinders (39) fixierbar ist.

11. Schweißmaschine nach einem der Ansprüche 1 bis 10, dadurch gekennzeichnet, daß eine gemeinsame Steuereinrichtung zum Anstellen der ansteuerbaren Einrichtungen (6, 15, 25, 32, 34, 39, 49) und zum Verschieben und Positionieren des Positionierwagens (47) vorgesehen ist.

## Claims

1. Welding machine operating according to the electrical resistance method for the production of grids consisting of longitudinal and transverse wires (L, Q) crossing each other and welded together at the crossing points, the machine comprising bus bars (8) fixed to a frame on one side of a horizontal welding plane (E-E) and connected to welding transformers, and a plurality of welding heads (K) arranged side by side, each welding head comprising an upper electrode (2) above the welding plane (E-E) and a lower electrode (13) below the welding plane (E-E), one of the electrodes being moveable toward the other, a connecting piece (22) penetrating the welding plane (E-E) from the bus bars (8) to the electrode on the opposite side of the welding plane (E-E) and a controllable welding cylinder (15) applying welding pressure to the moveable electrode, the welding heads (K) being moveable transversely to the advance direction (P₁) of the longitudinal wires to predetermined positions by means of a transport element (47) which in adapted to be coupled selectively with the welding heads, characterized in that the lower electrode (13) is adapted to be docked to the upper electrode (2) in the vertical direction by means of the pressure-operated welding cylinder (15) and by an anvil (16) supporting the welding cylinder and being adjustable in height, in that a lower electrode carrier (12) carrying the lower electrode (13) is adapted to be connected to the connecting piece (22), which is in turn connected with an upper electrode carrier (1) carrying the upper electrode (2) in order to form a mechanically rigid welding head (K), and in that this rigid welding head (K) is adapted to be released from a stationary upper beam (7) of the welding machine, from the bus bar (8) as well as from the anvil (16) and is adapted to be coupled with a positioning carriage (47) and moved therewith along a track (5) extending transversely to the advance direction (P₁) of the longitudinal wires across the width of the welding machine, the welding head (K) at the same time being adapted to be supported in the region of its lower side on a support track (41') extending transversely to the advance direction (P₁) of the longitudinal wires across the width of the welding machine, and in that all of the positionable welding heads (K) are adapted to be fixed by common vertical displacement to the stationary upper beam (7) of the welding machine and each individual welding head supported on the anvil (16) by means of its welding cylinder (15).

2. Welding machine according to claim 1, characterized in that the lower electrode carrier (22) is adapted to be connected mechanically with the connecting piece (22) via at least one centering pin (30), which is fastened to the lower electrode carrier (12) and adapted to be inserted into a centering recess (31) on the connecting piece (22), as well as via a retention pin (33) disposed on the connecting piece (22) and adapted to be inserted horizontally into the lower electrode carrier (12).

3. Welding machine according to claim 1 oder 2, characterized in that the welding head in releasably connected to the stationary bus bar (8) by means of a preferably pressure-operated clamping device (34) in order to establish an electrical contact.

4. Welding machine according to one of the claims 1 to 3, characterized in that the welding head is adapted to be released from the anvil (16) by means of a pressure-operated clamping cylinder (39) and a return spring acting in the welding cylinder (15) in vertical direction when the same is relieved from pressure, and from the stationary upper beam (7) by lowering a controllable track suspension (6) carrying the track (5) and being adjustable in height.

5. Welding machine according to one of the claims 1 to 4, characterized in that the positioning carriage (47) is vertically adjustable between a parking position (47₁) and a working position (47₂) and moveable horizontally transversely to the advance direction (P₁) of the longitudinal wires on rails (53) disposed on a track support (52) extending across the width of the welding machine.

6. Welding machine according to one of the claims 1 to 5, characterized in that the positioning carriage (47) is provided with a follower (50) which by means of a controllable activating device (49) is adapted to being inserted into a centering piece (51) fastened to the connecting piece (22) in the welding plane (E-E), which centering piece at the same time acting as feed tube (24) for the longitudinal wire.

7. Welding machine according to one of the claims 1 to 6, characterized in that the positioning carriage (47) is equipped with a controllable step motor (56).

8. Welding machine according to one of the claims 1 to 7, characterized in that for moving and positioning of the welding heads (K) a plurality of positioning carriages (47) is provided on a common track carrier (52) or on a track carrier (52) assocoiated with each positioning carriage (47).

9. Welding machine according to one of the claims 1 to 8, characterized in that the anvil (16) is adjustable by means of a controllable lifting wedge gear (25) for docking the lower electrode (13) to the upper electrode (2) and for adjusting the opening gap between the upper electrode (2) and the lower electrode (13) to the combined wire thicknesses of longitudinal wire (L) and transverse wire (Q).

10. Welding machine according to one of the claims 1 to 9, characterized in that each positioned welding head (K) by means of a pressure-operated clamping cylinder (39) is fixed to a clamping ledge (41) atached to the anvil (16).

11. Welding machine according to one of the claims 1 to 10, characterized in that a common control device is provided for adjusting the controllable devices (6, 15, 25, 32, 34, 39, 49) and for moving and positioning the positioning carriage (47).

## Revendications

1. Machine à souder fonctionnant selon le procédé à résistance électrique pour réaliser des grilles constituées par des fils longitudinaux et transversaux (L, Q) se croisant et soudés aux points de croisement, comprenant sur un côté d'un plan de soudage horizontal (E-E) des rails conducteurs (8) reliés à des transformateurs de soudage montés de façon fixe sur le châssis et plusieurs têtes de soudage (K) disposées les unes à côté des autres, qui comportent chacune une électrode supérieure disposée au-dessus du plan de soudage (E-E) et une électrode inférieure (13) disposée au-dessous du plan de soudage (E-E), l'une des électrodes étant mobile par rapport à l'autre, un élément de liaison (22) traversant le plan de soudage (E-E) et s'étendant des rails conducteurs jusqu'à l'électrode située sur le côté opposé du plan de soudage et un vérin de soudage (15) commandable appliquant la pression de soudage à l'électrode mobile, les têtes de soudage (K) pouvant être amenées dans des positions déterminées transversalement à la direction (P₁) de l'avance des fils longitudinaux au moyen d'un organe transporteur (47) pouvant être accouplé sélectivement aux têtes de soudage, caractérisée en ce que l'électrode inférieure (13) peut être appliquée contre l'électrode supérieure (2) au moyen du vérin de soudage (15) actionné par un agent sous pression et une enclume (16) réglable en hauteur et supportant le vérin de soudage, en ce qu'un porte-électrode inférieur (12) supportant l'électrode inférieure (13) peut être relié à l'élément de liaison (22) qui est de son côté solidaire d'un support d'électrode supérieur (1) supportant l'électrode supérieure (2) en vue de former une tête de soudage (K) mécaniquement rigide, en ce que cette tête de soudage rigide (K) peut être détachée d'une poutre supérieure (7) solidaire du châssis de la machine à souder, des rails conducteurs (8) et de l'enclume (16), accouplée à un chariot de positionnement (47) et déplacée avec ce chariot sur la largeur de la machine à souder le long d'une piste (5) transversale à la direction de l'avance (P₁) des fils longitudinaux, la tête de soudage (K) pouvant s'appuyer simultanément dans la région de son côté inférieur sur une voie d'appui (41') transversale à la direction de l'avance (P₁) des fils longitudinaux et s'étendant sur la largeur de la machine à souder, et en ce que toutes les têtes de soudage (K) positionnées peuvent être fixées à la poutre supérieure (7) solidaire du châssis de la machine à souder par un mouvement vertical commun et chaque tête de soudage individuelle peut être mise en appui au moyen de son vérin de soudage (15) sur l'enclume (16).

2. Machine à souder selon la revendication 1, caractérisée en ce que le support d'électrode inférieur (12) peut être relié mécaniquement à l'élément de liaison (22) par l'intermédiaire d'au moins une tige de centrage (30) montée sur le porte-électrode inférieur (12) et pouvant être introduite dans un évidement de centrage (31) de l'élément de liaison (22) ainsi que d'une tige de blocage (33) montée sur l'élément de liaison (22) et pouvant être introduite horizontalement dans le porte-électrode inférieur (12).

3. Machine à souder selon la revendication 1 ou 2, caractérisée en ce que la tête de soudage est reliée de façon amovible à un dispositif de serrage (34) actionné de préférence par un agent sous pression, pour réaliser un contact électrique avec les rails conducteurs (8) solidaires du châssis.

4. Machine à souder selon l'une quelconque des revendications 1 à 3, caractérisée en ce que la tête de soudage peut être dégagée de la poutre supérieure (7) solidaire du châssis par un vérin de serrage (32) actionné par un agent sous pression, de l'enclume (16) par un ressort de rappel qui est actif lors de la suppression de la pression dans le vérin de soudage (15) et agit sur lui en direction verticale, et de la poutre supérieure (7) solidaire du châssis par abaissement d'une suspension (6) commandable et mobile en hauteur et supportant la piste (5).

5. Machine à souder selon l'une quelconque des revendications 1 à 4, caractérisée en ce que le chariot de positionnement (47) peut être déplacé verticalement entre une position d'attente (47₁) et une position de travail (47₂) et horizontalement transversalement à la direction (P₁) de l'avance des fils longitudinaux sur des rails (53) qui sont montés sur un support (52) s'étendant sur la largeur de la machine à souder.

6. Machine à souder selon l'une quelconque des revendications 1 à 5, caractérisée en ce que le chariot de positionnement (47) est muni d'un élément d'entraînement (50) qui peut être introduit, dans le plan de soudage (E-E), par un dispositif d'actionnement commandable (49) dans un élément de centrage (51) monté sur l'élément de liaison (22) et simultanément pour centrer un tube de guidage de fil longitudinal (24).

7. Machine à souder selon l'une quelconque des revendications 1 à 6, caractérisée en ce que le chariot de positionnement (47) est équipé d'un moteur pas-à-pas commandable (56).

8. Machine à souder selon l'une quelconque des revendications 1 à 7, caractérisée en ce que sont prévus, pour le déplacement et le positionnement des têtes de soudage (K), plusieurs chariots de positionnement (47) sur un support de piste (52) commun ou associé à chaque chariot de positionnement (47).

9. Machine à souder selon l'une quelconque des revendications 1 à 8, caractérisée en ce que l'enclume (16) peut être déplacée au moyen d'un mécanisme à cale de levage (25) commandable pour appliquer l'électrode inférieure (13) contre l'électrode supérieure (12) et pour régler la fente ouverte adaptée à l'épaisseur commune du fil longitudinal (L) et du fil transversal (Q) entre l'électrode supérieure (2) et l'électrode inférieure (13).

10. Machine à souder selon l'une quelconque des revendications 1 à 9, caractérisée en ce que chaque tête de soudage (K) en position peut être fixée à une bande de serrage (41) reliée à l'enclume (16) au moyen d'un vérin de serrage (39) actionné par un agent sous pression.

11. Machine à souder selon l'une quelconque des revendications 1 à 10, caractérisée en ce qu'il est prévu un dispositif de commande commun destiné au réglage des dispositifs commandables (6, 15, 25, 32, 34, 39, 49) et pour déplacer et positionner le chariot de positionnement (47).
